# EUROPÄISCHE PATENTANMELDUNG

(11) **EP 0 688 645 A2**
(43) Veröffentlichungstag der Anmeldung: **27.12.1995**
(21) Anmeldenummer: 95109465.5
(22) Anmeldetag: 19.06.1995
(51) Int. Cl.: B29B 17/00, B29B 13/10, B29C 43/06

(54) **Plattenwerkstoff und Verfahren zu seiner Herstellung**

(30) Priorität: 23.06.1994 US 264542
(71) Anmelder: Eduard Küsters Maschinenfabrik GmbH & Co. KG, D-47805 Krefeld (DE)
(72) Erfinder: Funger, Bernhard, D-47839 Krefeld (DE); Grüber, Heinz, D-47918 Tönisvorst (DE)
(74) Vertreter: Palgen, Peter, Dr. Dipl.-Phys.

(57) **Zusammenfassung**

Der Plattenwerkstoff (4O) umfaßt Holzfurnierschichten (21,21') und dazwischen angeordnete Schichten (14) aus einem Teppichmaterial mit mindestens einem Anteil an ungereinigtem Altteppich, welches zu einem faserartigen Gewölle zerkleinert worden ist. Das Teppichmaterial enthält ein niedrigschmelzendes thermoplastisches Bindemittel, z.B. Polypropylen, welches aus dem Altteppich stammen oder zugesetzt sein kann. Dem Teppichmaterial kann ferner ein duroplastisch aushärtendes Bindemittel, z.B. Phenolharz zugesetzt sein. Das Teppichmaterial wird bei einer über dem Erweichungspunkt des thermoplastischen Bindemittels, jedoch unter dem Erweichungspunkt etwaiger sonstiger thermoplastischer Anteile des Teppichmaterials liegenden Temperatur zu Platten (14) verpreßt, die anschließend mit den Holzfurnierschichten (21,21') flächig verklebt werden. Alternativ können die Holzfurnierschichten (21,21') mit dem gestreuten Teppichmaterial auch in einem Zuge zu dem Plattenwerkstoff verpreßt werden.

## Beschreibung

Die Erfindung bezieht sich auf einen Plattenwerkstoff nach dem Oberbegriff des Anspruchs 1 und ein Verfahren zu seiner Herstellung.

Ein Problem wachsender Bedeutung stellt die Entsorgung von sogenannten Altteppichen dar, das heißt von Teppichmaterial, welches in Wohnungen oder Objekten manche Jahre als Auslegeware gelegen hat und nun aus Gründen der Abnutzung oder der Renovierung entfernt und durch neue Ware ersetzt wird. Die Altteppiche fallen in einer erheblichen Menge an, die einen bedeutenden Anteil der Teppichproduktion ausmacht. Bisher war es üblich, Altteppiche, die in der Bundesrepublik als Sondermüll gelten, zu verbrennen oder zu deponieren, wobei einschneidende behördliche Auflagen zu beachten sind.

Es sind aber bereits Tendenzen bemerkbar, die Entsorgungslast auf die Teppichhersteller zu verlagern und sie zu verpflichten, Altteppiche in einer bestimmten Proportion zur Produktion zurückzunehmen. Die Verantwortung für das Altmaterial landet auf diese Weise wieder beim Hersteller.

Besondere Schwierigkeiten bei Überlegungen zur Wiedernutzung des textilen Fasermaterials in den Altteppichen liegen einerseits in der fehlenden Sortenreinheit und andererseits in der Belastung des textilen Material mit Fremdstoffen.

Die fehlende Sortenreinheit ist in zwei Hinsichten gegeben. Sie kann beim einzelnen Teppich vorhanden sein, der z.B. einen Pol aus Polyamid oder Polyester und einen Rücken aus Polypropylen oder dergleichen aufweisen kann. Sie liegt aber auch in der zur Wiederverwertung anfallenden Gesamtmenge der Altteppiche vor, insofern die Herkunft und die Zusammensetzung des einzelnen Teppichstücks meist nicht bekannt ist und sich eine diesbezügliche Untersuchung einzelner Teppichstücke aus Kostengründen verbietet. Die Sortenvermischung hat überdies noch einen besonderen Aspekt, insofern außer thermoplastischen oder duroplastischen Kunststoffasern auch tierische oder pflanzliche Fasern wie Wolle oder Baumwolle zugegen sein können. Es muß also in einer Menge an Altteppichstücken hinsichtlich der Fasern praktisch mit allem gerechnet werden.

Im Hinblick auf die Fremdstoffe haben Untersuchungen gezeigt, daß die Belastung der Altteppiche bis zu 30 Gewichtsprozent betragen kann. Es handelt sich dabei um Schmutz, der im Laufe der Zeit in Gestalt von Staub oder in den Teppich hineingetretenen organischen oder mineralischen Partikeln in den Teppich hineingelangt ist und um Reste des Rückens, das heißt des Schaummaterials und der Füllstoffe sowie anhaftende Kleberreste.

Bemühungen zur Wiedergewinnung der textilen Anteile in reiner Form, die mit einer Reinigung der Altteppiche und einer Isolierung der Fremdstoffe einhergehen, sehen sich vor einem Anteil von bis zu 300 kg dieser Fremdstoffe pro Tonne Altteppich, die nach der aufwendigen Reinigung und Sortierung des Altteppichmaterials irgendwie dauerhaft unschädlich gemacht werden müssen.

Es hat nicht an Versuchen gefehlt, Teppichmaterial einer erneuten sinnvollen Nutzung zuzuführen, z.B. indem es zu Platten verpreßt worden ist.

So ist in der DE 24 57 848 A1 ein Preßstoffkörper beschrieben, der auch die Gestalt einer Platte haben kann, bei welchem Abfallmaterial von Teppichen geschnitzelt und mit einem Bindemittel in gepreßtem Zustand abbinden gelassen wird. Das Bindemittel kann unter anderem Phenolharz enthalten, aber auch ein schäumfähiges Bindemittel sein. Die Platte kann eine Deckschicht aus Papier, textilem Material, Kunststoff, Holz oder dergleichen aufweisen. Ein anderer Versuch dieser Art ist Gegenstand der DE 27 22 774 A1, in welcher die Verwertung von Abfällen von Autoteppichen und Nadelfilzen beschrieben ist, die thermoplastische Anteile aufweisen. Die Abfälle werden geschnitten, in einer Schicht angeordnet und über den Schmelzpunkt eines Teils der thermoplastischen Anteile erhitzt, gepreßt und abgekühlt. Als Beispiel für die thermoplastischen Anteile sind Polyethylen und Polypropylen genannt, die bereits bei 160 bis 180° genügend fließfähig sind, um die Gesamtmasse zu durchdringen und einen homogenen Preßstoffkörper zu bilden.

Auch die DD-PS 61 094 und die AT-PS 25 25 46 befassen sich mit dem Verpressen von textilen Abfällen zu Platten.

Gemeinsam ist den bisher erwähnten Versuchen, daß sie auf die Verwendung von Produktions- und Konfektionierungsabfällen gerichtet sind, das heißt sich mit unbenutztem Material gleichbleibender, wenn auch möglicherweise nicht sortenreiner Zusammensetzung befaßten. Das Problem, daß die bis zu 30 Gewichtsprozent der Gesamtmenge ausmachenden Fremdstoffe die Bindung der Platten und deren mechanische Eigenschaften beeinflussen, lag bei dem geschilderten Versuchen nicht vor und ist dementsprechend auch nicht in Angriff genommen worden. Dies ist vielmehr erst in der DE 41 37 744 A1 geschehen, bei der auch Altteppiche verarbeitet und beim Pressen einer Platte thermoplastische Teppichanteile besonders in oberflächennahen Bereichen aufgeschmolzen wurden, um hier eine Art Tragschicht eines Schichtwerkstoffs zu bilden. Es hat sich aber gezeigt, daß die nach der DE 41 37 744 A1 hergestellten Platten in ihren mechanischen Eigenschaften noch verbesserungsbedürftig sind.

Der Erfindung liegt die Aufgabe zugrunde, Altteppich umfassende Teppichreste mit minimalem Aufwand dauerhaft zu entsorgen.

Diese Aufgabe wird durch die Herstellung eines Plattenwerkstoffs nach Anspruch 1 und das entsprechende Verfahren nach Anspruch 11 gelöst.

Mehrschichtige Plattenwerkstoffe nur aus Holzschichten sind als Sperrholz seit langem bekannt. Ein Charakteristikum des Sperrholzes ist aber gerade sein Aufbau nur aus Holzmaterial.

Ein mehrschichtiges Plattenmaterial mit zwei Deckschichten aus Holz ist, wie bereits erwähnt, aus der DE 24 57 848 A1 zu entnehmen. Hierbei ist die innere Schicht jedoch nicht aus zu einem fasrigen Gewölle zerkleinertem Altteppich gebildet.

Die erfindungsgemäßen Plattenwerkstoffe sind von einer erstaunlichen Biegesteifigkeit, das heißt, das Material besitzt einen hohen E-Modul. Dies macht den Plattenwerkstoff besonders geeignet für Auskleidungszwecke insbesondere im Bauwesen oder im Fahrzeugbau. Die Zahl der Schichten wird bedarfsweise gewählt. Es können also unterschiedliche Plattenwerkstoffe aus Komponenten gleichbleibender Art und Dimension zusammengestellt werden.

Für die hohe Biegesteifigkeit des Produkts sind das Zusammenwirken der Holzschichten mit den dazwischenliegenden Schichten des Teppichmaterials und die Eigenschaften dieser Schichten selbst von Bedeutung, die schon für sich gute mechanische Werte haben. Dafür sind mehrere Aspekte maßgeblich.

Es muß zunächst das Teppichmaterial so intensiv zerkleinert werden, daß dem Zerkleinerungsprodukt nichts Teppichartiges mehr anhaftet. Die Zerkleinerung muß eine Zerlegung des Teppichmaterials bis in seine einzelnen Fasern ergeben, so daß das Zerkleinerungsprodukt eine Art grobfasriger Watte wird, was mit dem Ausdruck "fasriges Gewölle" gemeint ist.

Wenn ein solcher Füllstoff mit einem thermoplastischen, bei der Verarbeitungstemperatur geschmolzenen Bindemittel verpreßt wird, wird es von dem thermoplastischen Bindemittel ganz durchsetzt, und es bildet das thermoplastische Bindemittel gewissermaßen eine Matrix, in der die Fasern eingelagerte Verstärkungselemente bilden, so daß sich eine Art Verbundwerkstoff ergibt. Durch die feine Zerkleinerung des Teppichmaterials ist das Volumen des fertigen Formteils ziemlich homogen mit Fasern durchdrungen, so daß keine unverstärkten Zonen größeren Ausmaßes auftreten und das Formteil nach außen hin homogen verstärkt erscheint.

Ein weiteres nicht zu erwartendes vorteilhaftes Ergebnis bei der Erfindung besteht darin, daß der hohe Anteil an Fremdstoffen in den verwerteten Altteppichen, also der Schmutz, die Schaumreste und die Kleberreste problemlos in das Material der Zwischenschichten integriert wird und die Festigkeitseigenschaften des Materials eher positiv beeinflußt. Es ist also mit dem erfindungsgemäßen Verfahren möglich, Altteppiche so zu verarbeiten, wie sie angeliefert werden, und ohne aufwendige Reinigungs- und Separierprozesse daraus die erfindungsgemässen Plattenwerkstoffe herzustellen.

Die dünnen Platten aus dem Teppichmaterial haben, wenn sie separat hergestellt werden, eine gute Oberflächenqualität und können häufig eingesetzt werden, wie sie aus der Presse kommen. Hierfür dürfte der thermoplastische Anteil verantwortlich sein, der sich unter dem Druck in alle Zwischenräume des Materials hineindrängt und die Oberfläche schließt.

Daß die Aufheizung des Materials bei der Herstellung der dünnen Platten bzw. des Plattenwerkstoffs in der Presse nicht so weit getrieben wird, daß sämtliche thermoplastischen Anteile schmelzen, hat seine Gründe: einerseits sollen durchaus Fasern in ihrer Faserstruktur und ihrem beispielsweise durch Verstrickung gewonnenen Eigenschaften erhalten bleiben, um in dem fertigen Werkstoff als verstärkendes Verbundmaterial zu wirken. Zum andern erforderte das Aufschmelzen aller thermoplastischen Anteile so hohe Temperaturen, wie sie mit den heutigen Heizflüssigkeiten für Pressen kaum darstellbar sind. Die hohen Temperaturen sind auch wegen der Wärmeverluste nicht anzustreben. Die Aufheizung soll vielmehr gerade so weit gehen, daß die niedrigsten Schmelz- und Erweichungsbereiche überschritten werden und der Bindungsmechanismus über das Aufschmelzen und Verteilen unter Druck dieser thermoplastischen Komponente des Gesamtmaterials zum Tragen kommt.

Die Preßdauer wird so gewählt, daß die thermoplastische Bindung über die Dicke des Formteils möglichst gleichmäßig erfolgt.

Die Wärme muß ja von den Preßflächen her in die schlecht wärmeleitende Preßmasse hineingebracht werden, was eine gewisse Zeit erfordert, bis die Temperatur auch im Innern auf einen zum Schmelzen des thermoplastischen Bindemittels ausreichenden Wert gestiegen ist.

Die einzelnen Schichten des Plattenwerkstoffs können untereinander flächig verklebt sein und eine im wesentlichen gleiche Dicke aufweisen (Ansprüche 2,3). Ferner können benachbarte Holzfurnierschichten senkrecht zueinander verlaufen (Anspruch 4). Die vorstehenden Merkmale sind bei Sperrholz für sich genommen bekannt.

Das thermoplastische Bindemittel, das für die Zwischenschichten in erster Linie in Betracht kommt, ist Polypropylen, welches häufig z.B. als Rückenmaterial in modernen, als Auslegeware verwendeten Teppichmaterialien vorkommt. Es hat einen Erweichungspunkt im Bereich von etwa 160° C und wird relativ dünnflüssig, was die Verteilung durch die Fasermasse hindurch fördert (Anspruch 5).

In Fällen, in denen das zur Verfügung stehende Teppichmaterial von Haus aus genügend an derartigen thermoplastischen Bindemitteln umfaßt, kann das Teppichmaterial insoweit so verwendet werden, wie es angeliefert worden ist.

Wenn aber der eigene Gehalt des Teppichmaterials an niedrig schmelzendem thermoplastischen Bindemittel zu gering ist, kann derartiges Bindemittel dem Teppichmaterial auch zugesetzt werden, z.B. in Gestalt von sortenreinem, aus dem thermoplastischen Bindemittel bestehenden Abfallmaterial, z.B. von Teppichresten aus der Fabrikation oder der Konfektion.

Obwohl Ausgangspunkt der Erfindung das Problem der Altteppiche gewesen ist, ist sie nicht auf den ausschließlichen Einsatz solcher Altteppiche beschränkt, sondern es muß lediglich ein gewisser Anteil solcher Altteppiche vorhanden sein, dem aber auch andere oder gebrauchte Teppichabfälle und auch sonstige kleinteiligen Abfälle zugesetzt werden können.

Zur Erhöhung des E-Moduls kann zusätzlich ein Anteil von 1 bis 15 Gewichtsprozent des Teppichmaterials eines duroplastisch aushärtenden Bindemittels zugegen sein (Anspruch 6).

Es ergibt sich ein überraschend vorteilhaftes Zusammenwirken zweier Arten von Bindung, nämlich derjenigen über die thermoplastischen Anteile der Gesamtmasse und derjenigen über das duroplastisch aushärtende Bindemittel, als welche die gleichen harzartigen Verbindungen in Betracht kommen, die auch bei der Herstellung von Spanplatten Verwendung finden (Anspruch 7). Bei Spanplatten greifen diese Bindemittel aber am Holz an, während hier eine deutliche Steigerung der Festigkeitseigenschaften auch ohne das Vorhandensein von Holz festzustellen ist, was nicht erwartet werden konnte.

Bei einem andersartigen, nämlich zellulosischen Fasermaterial, geht das gleichzeitige Vorhandensein an thermoplastischen und duroplastischen Bindemitteln aus der DE 32 33 385 C2 hervor. Hierbei sind diese unterschiedlichen Bindemittel aber in verschiedenen Schichten eines Mehrschichtverbundstoffs angeordnet, so daß das Zusammenwirken an ein und derselben Stelle fehlt.

Eine wichtige Ausgestaltung der Erfindung, die einen weiteren bedeutenden Gewinn an Biegefestigkeit bzw. E-Modul der Zwischenschichten für sich genommen ergibt, ist der Zusatz eines Anteils von 10 bis 50 Gewichtsprozent des Teppichmaterials an faserartigen Holzspänen in homogener Verteilung und willkürlicher Orientierung (Anspruch 8).

Die zugesetzten Holzspäne können eine Größenverteilung und Gestalt nach Anspruch 9 aufweisen, das heißt es kann sich um in einem Refiner gemahlenes Material handeln, ähnlich dem Ausgangsmaterial für MDF (Medium Density Fibers)-Platten.

Das zur Herstellung der Zwischenschichten dienende Ausgangsmaterial aus zerkleinerten Teppichresten hat eine nicht unproblematische Struktur. Es besteht aus den Textilfasern, die das erwähnte "faserartige Gewölle" bilden, und den in dem Altteppich vorhandenen Fremdstoffen, die einen bestimmten Anteil an mineralischen Schmutzstoffen enthalten, die die Tendenz haben, durch das Gewölle hindurchzufallen, so daß sich beim Streuen der zu verpressenden Matte häufig eine Einseitigkeit des Formteils bzw. der Platte einstellt, weil sich Fremdstoffe auf der Unterlage ansammeln.

Um diesen Effekt zu vermeiden, hat es sich als zweckmäßig erwiesen, daß das Formteil einen Anteil von 0,5 bis 2 % Wachs oder Stearin enthält, der dem zu verpressenden Gesamtmaterial vor dem Aufstreuen z.B. durch Aufsprühen als Emulsion oder in sonstiger verflüssigter Form zugesetzt worden ist. Die Vermischung mit dem Wachs oder Stearin kann während der Zerkleinerung des Teppichmaterials, z.B. beim Mahlen, oder in einem sich an das Zerkleinern anschließenden separaten Mischvorgang erfolgen. Überraschenderweise hat sich gezeigt, daß ein Zusatz an Wachs oder Stearin eine wesentliche Verminderung der Entmischung der Fremdstoffanteile und der Faseranteile des zu verpressenden Gesamtmaterials mit sich bringt, so daß die unerwünschte Einseitigkeit der hergestellten Formteile bzw. Platten fast ganz unterdrückt werden kann.

In den Ansprüchen 11 bis 30 sind die verfahrensmäßigen Aspekte der Erfindung festgehalten.

Wesentlich ist, daß nach den Ansprüchen 11 und 12 die Zwischenschichten entweder als separate Platten hergestellt und dann mit den Holzfurnierschichten verklebt werden können oder die Holzfurnierschichten mit dem die Zwischenschichten ergebenden Teppichmaterial als lose gestreute Matten zusammengebracht und mit diesen zusammen in einem Zuge zu dem Plattenwerkstoff verpreßt werden können.

Anhand der Zeichnung wird die Erfindung näher erläutert.
Fig. 1 zeigt eine Ansicht des erfindungsgemäß zu verpressenden Teppichmaterials;
Fig. 2 zeigt eine Ansicht des gleichen Materials mit einem Zusatz an faserartigen Holzspänen;
Fig. 3 zeigt eine schematische Seitenansicht einer Doppelbandpresse zur Herstellung von Plattenmaterial nach der Erfindung;
Fig. 4 zeigt eine Ansicht einer Plattenfläche für eine Zwischenschicht;
Fig. 5 eines Plattenquerschnitts einer erfindungsgemäßen Platte in etwa 1,5-facher Vergrößerung;
Fig. 6 zeigt einen Querschnitt durch ein Ausführungsbeispiel eines siebenschichtigen Plattenwerkstoffs in etwa 3-facher Vergrößerung;
Fig. 7 zeigt eine schematische Seitenansicht einer zu Fig. 3 alternativen Doppelbandpresse.

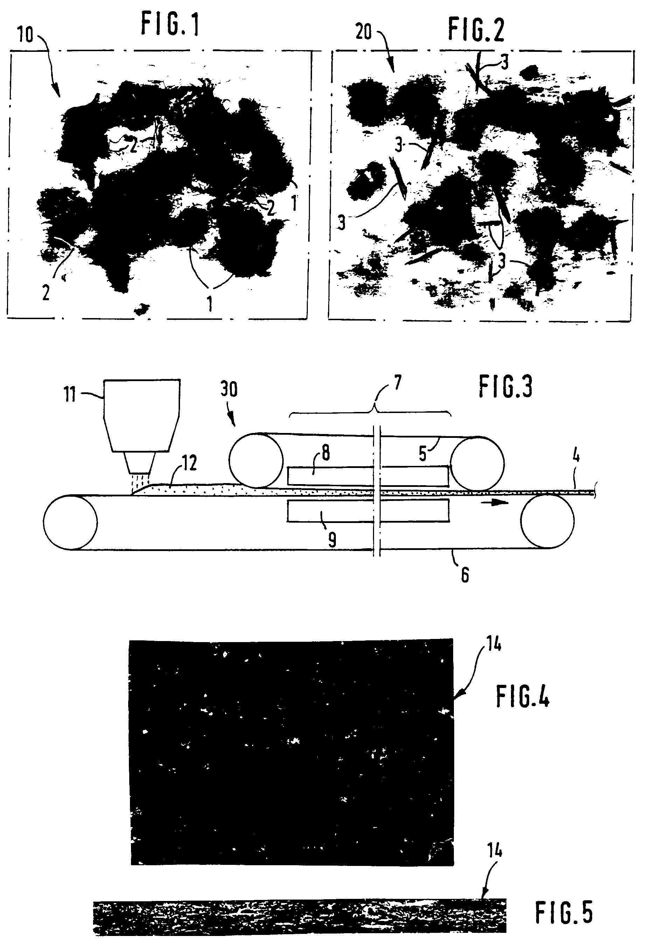

Das in Fig. 1 wiedergegebene Teppichmaterial besteht aus Altteppich, der in einer Hackmaschine in etwa handtellergroße Stücke zerhackt und anschließend in einer Mühle fein zermahlen worden ist, wobei keinerlei Reinigung stattgefunden hat und die bis zu 30 % des Gewichts betragende Belastung mit Fremdstoffen, insbesondere Schmutz, Sand und anderen mineralischen Partikeln in dem Material verbleibt.

Die Zerkleinerung durch das Mahlen geht so weit, daß die Teppichstruktur vollkommen verloren geht und nur noch ein fasriges Gewölle übrigbleibt, welches sich beim Durchgang durch das Ausgangssieb der Mühle zu kleinen lockeren Bäuschen 1 agglomeriert. In dem gezeigten Ausführungsbeispiel hatte der Teppich einen Polyamid-Flor und einen Bändchenrücken aus Polypropylen. Die Rückenpartikel 2 sind noch als unterschiedliches Material erkennbar. Die thermoplastischen Anteile machen etwa 5 bis 30 Gewichtsprozent, in dem Ausführungsbeispiel etwa 20 Gewichtsprozent des gemahlenen Altteppichs aus.

Während das Teppichmaterial 10 der Fig. 1 nur Bestandteile des Altteppichs enthält, sind dem Teppichmaterial 2O der Fig. 2 gefaserte Holzspäne 3 in einem Anteil von 35 % des zerkleinerten Teppichmaterials zugesetzt.

Die Teppichmaterialien 10 oder 20 enthalten von Haus aus genügend Polypropylen, welches als thermoplastischer Binder dient. Im anderen Fall muß zusätzliches Polypropylen oder ein vergleichbares thermoplastisches Bindemittel zugesetzt werden.

Außerdem kann gewünschtenfalls dem Teppichmaterial 10 bzw. 20 ein Anteil von 1 bis 15 Gewichtsprozent des Teppichmaterials, beispielsweise 5 oder 10 Gewichtsprozent, an Phenolharz oder einem ähnlichen harzartigen, duroplastisch aushärtenden Bindemittel mit den dafür bekannten Techniken zugesetzt werden.

Dieses Ausgangsmaterial wird bei dem Ausführungsbeispiel der Fig. 1 bis 6 in der Doppelbandpresse 30 der Fig. 3 zu einer Plattenbahn 4 verpreßt. Die Doppelbandpresse 30 umfaßt ein oberes Formband 5 und ein unteres Formband 6 aus Stahlblech, die über Umlenkrollen endlos umlaufen und einer Preßstrecke 7 einander gegenüberliegend mit gleicher Geschwindigkeit im Sinne des Pfeiles vorlaufen. Im Bereich der Preßstrecke 7 sind die vorlaufenden Formbänder 5,6 durch entsprechende, nur schematisch angedeutete Einrichtungen 8,9 abgestützt, und es kann Wärme durch die Formbänder 5,6 hindurch auf die sich bildende Plattenbahn 4 übertragen werden.

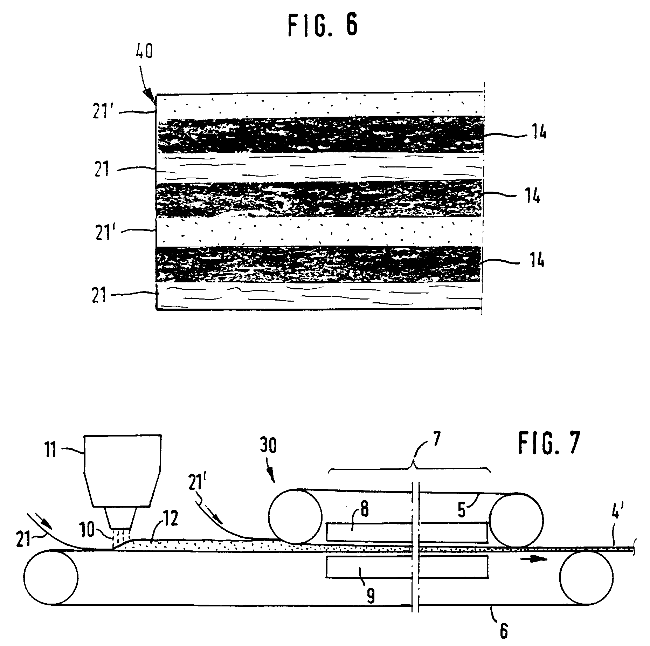

Das untere Formband 6 besitzt eine vorgeschaltete Streustrecke, in der aus einem Vorratsbehälter 11 mittels geeigneter Einrichtungen eine Matte oder Schüttung 12 aus dem noch lockeren, das thermoplastische Bindemittel und gegebenenfalls ein duroplastisch aushärtendes Bindemittel enthaltenden Teppichmaterial hergestellt wird. Die Schüttung 12 wird beim Einlauf zwischen die Formbänder 5,6 verdichtet und in der Preßstrecke 7 nach einem vorgebbaren Zeit-Temperatur-Druckdiagramm ausgehärtet. Die fertig ausgehärtete Plattenbahn wird in dem letzten Stück der Doppelbandpresse oder in einer separat nachgeschalteten Kühleinrichtung abgekühlt und kann dann konfektioniert werden. Eine aus der Plattenbahn 4 entnommene Platte 14 weist ein marmoriertes Aussehen mit dichter ziemlich glatter Oberfläche auf. Über die Dicke der Platte 14 ist ein Strukturunterschied mit dem Auge nicht feststellbar, wie Fig. 5 zeigt. In dem vorliegenden Ausführungsbeispiel war indessen auch eine möglichst homogene Verteilung der Komponenten angestrebt.

Um den Einfluß der einzelnen Komponenten qualitativ zu erfassen, wurden Biegeversuche durchgeführt. Die zugrundeliegenden Platten hatten eine Dicke von 6 mm und ein spezifisches Gewicht von 950 kg/m³. Der Flor des verwendeten Teppichmaterials bestand aus Polyamid, der Rücken aus Polypropylen, welches durch Zusatz von Polypropylenabfällen auf einen Anteil an dem Gesamt-Teppichmaterial von 20 % Gewichtsprozent gebracht wurde. Diesem Gesamt-Teppichmaterial wurde ein Zusatz von 10 Gewichtsprozent Phenolharz als duroplastisch aushärtendes Bindemittel beigegeben. Aus den Biegewerten wurden die in der nachfolgenden Tabelle zusammengefaßten E-Module errechnet.

| Teppichmaterial | Polyamid | Polyamid | Polyamid |
|---|---|---|---|
| thermoplastisches Bindemittel | - | Polypropylen 2O % | Polypropylen 2O % |
| duroplastisch aushärtendes Bindemittel | Phenolharz 1O % | - | Phenolzarz 1O % |
| E-Modul (N/mm²) | 45O | 59O | 96O |

Den geringsten Wert ergab eine Bindung nur mit dem Phenolharz. Eine Bindung nur mit Polypropylen ließ schon eine deutliche Steigerung des E-Moduls erkennen. Eine Bindung sowohl mit Polypropylen als auch mit Phenolharz ergab fast eine Verdoppelung des E-Moduls. Die beiden unterschiedlichen Typen von Bindemitteln wirken also offensichtlich in einer besonderen Weise zur Steigerung der Formsteifigkeit des erzeugten Produkts zusammen.

Es wurden auch Biegeversuche mit Platten von 6 mm Dicke und einem spezifischen Gewicht von 950 kg/m³ durchgeführt, die aus dem Teppichmaterial 20, also mit einem Zusatz an faserartigen Holzspänen hergestellt war. Das Ergebnis ist in der nachfolgenden Tabelle wiedergegeben.

| | Versuch 1 | Versuch 2 |
|---|---|---|
| Teppichanteil Mischung: | | |
| 80 % Polyamid | 65 % | 85 % |
| 20 % Polypropylen | | |
| Holzanteil | 35 % | 15 % |
| Phenolharz | 5 % | 5 % |
| E-Modul (N/mm2) | 1.62O | 95O |

Der Phenolharzzusatz betrug hier 5 % des Gesamt-Teppichmaterials, das in der angegebenen Weise zusammengesetzt war. Es zeigt sich, daß die Erhöhung des Holzzusatzes von 15 auf 35 Gewichtsprozent einen fast doppelt so hohen E-Modul ergibt, wobei im letzteren Fall der Wert weit über dem holzfreien E-Modul von 960 N/mm² liegt, der unter Einsatz der doppelten Menge des teuren Phenolharzes erzielt worden ist. Der Zusatz von Holzfasern verbessert also die Biegefestigkeit und Formsteifigkeit der erzeugten Platten beträchtlich.

Zur Herstellung des Plattenwerkstoffs wurden auf der Presse 3O der Fig. 3 relativ dünne Plattenbahnen 4 von etwa 1 bis 4 mm Dicke, vorzugsweise etwa 2 mm Dicke hergestellt und mit Holzfurnierschichten etwa gleicher Dicke zu dem Plattenwerkstoff vereinigt.

Der Plattenwerkstoff 40 der Fig. 6 ist aus drei dünnen Platten 14 nach den Fig. 4 und 5 und vier Holzfurnierschichten 21,21' sperrholzartig zusammengesetzt, die sämtlich miteinander unter Druck flächig verklebt sind. Bei den Holzfurnierschichten 21 verläuft die Faserrichtung parallel zur Zeichenebene, bei den Furnierschichten 21' senkrecht zur Zeichenebene. Jede Plattenschicht 14 weist auf beiden Seiten eine Holzfurnierschicht 21, 21' auf. Durch Kombination verschieden vieler Schichten können Plattenwerkstoffe unterschiedlicher Dicke hergestellt werden, die an wechselnde Bedarfsfälle angepaßt werden können. Ist der Plattenwerkstoff 4O aus einer größeren Anzahl Schichten 21,14,21',14,. aufgebaut, kann er strukturelle Aufgaben übernehmen. Bei einer geringeren Anzahl von Schichten wird der Plattenwerkstoff 4O vornehmlich als Auskleidungsplatte eingesetzt.

Bei dem Ausführungsbeispiel der Fig. 1 bis 6 werden zuerst separate Platten 14 aus dem Teppichmaterial hergestellt und anschließend mit den Holzfurnierschichten 21,21' verklebt. Bei dem Ausführungsbeispiel der Fig. 7 jedoch erfolgt die Herstellung des Plattenwerkstoffs 4O in einem Zuge. Zunächst gelangt eine Holzfurnierschicht 21 in der Streustrecke auf das untere Formband 6. Die Holzfurnierschicht 21 kann wie gezeichnet bandförmig sein oder aber auch in einzelnen aneinander anschließenden Blättern aufgelegt werden. Auf die Holzfurnierschicht 21 wird eine Schüttung 12 aus dem Teppichmaterial 1O oder 11 aufgebracht, auf die wiederum eine Holzfurnierschicht 21' aufgelegt wird. Das Paket der Holzfurnierschichten 21,21' mit dem gestreuten Material 1O oder 2O werden zusammen durch die Doppelbandpresse 3O gefahren. Dabei erfolgen die thermoplastische Bindung der Schüttung 12 unter Druck und Wärme und die Verbindung mit den Holzfurnierschichten 21,21', ohne daß es des gesonderten Verklebens bedarf. Bei dem Beispiel der Fig. 7 ergibt sich eine nur dreischichtige Plattenbahn 4'. Normalerweise kommen mehr Schichten in Betracht. Dann sind mehrere Vorratsbehälter 11 mit dazwischen erfolgender Zuführung der Holzfurnierschichten 21,21' hintereinandergeschaltet.

Für die Herstellung des Plattenwerkstoffs 4O wurde eine Doppelbandpresse nach der DE-PS 21 57 764 verwendet. Die Temperatur der Formbänder 5,6 gemäß Fig. 3 bzw. 7 betrug etwa 2OO°C, der Druck in der Preßstrecke 7 ca. 5OO N/cm². Die Zeit während der das Teppichmaterial dieser Temperatur und diesem Druck ausgesetzt waren, belief sich auf 9O-18O s.

## Patentansprüche

1. Plattenwerkstoff aus mehreren separaten, Holzfurnier umfassenden Schichten, die flächig miteinander verbunden sind, dadurch gekennzeichnet, daß der Plattenwerkstoff (4O) aus den Holzfurnierschichten (21,21') und abwechselnd damit vorgesehenen Zwischenschichten (14) gebildet ist, welche zu einem Fasergewölle zerkleinertes Teppichmaterial (1O,2O) mit zumindest einem Anteil an ungereinigtem Altteppich umfassen, wobei das Teppichmateiral (1O,2O) mit geschmolzenem thermoplastischem Bindemittel in einem Anteil von 5 bis 3O Gewichtsprozent des Teppichmaterials durchsetzt und zu einer kompakten dünnen Platte (14) verpreßt ist.

2. Plattenwerkstoff nach Anspruch 1, dadurch gekennzeichnet, daß die Schichten (21,14,21',14,...) flächig verklebt sind.

3. Plattenwerkstoff nach Anspruch 1 oder 2, dadurch gekennzeichnet, daß die Schichten (21,21',14) untereinander im wesentlichen gleiche Dicke von etwa 1 bis 4 mm aufweisen.

4. Plattenwerkstoff nach einem der Ansprüche 1 bis 3, dadurch gekennzeichnet, daß die Faserrichtungen einander benachbarter Holzfurnierschichten (21,21') senkrecht zueinander verlaufen.

5. Plattenwerkstoff nach einem der Ansprüche 1 bis 4, dadurch gekennzeichnet, daß in mindestens einer Zwischenschicht (14) als thermoplastisches Bindemittel Polypropylen zugegen ist.

6. Plattenwerkstoff nach einem der Ansprüche 1 bis 5, dadurch gekennzeichnet, daß in mindestens einer Zwischenschicht (14) zusätzlich ein Anteil von 1 bis 15 Gewichtsprozent des Teppichmaterials eines duroplastisch aushärtenden Bindemittels enthalten ist.

7. Plattenwerkstoff nach Anspruch 6, dadurch gekennzeichnet, daß als duroplastisch aushärtendes Bindemittel Harnstoff-Formaldehyd-Harz, Melamin-Formaldehyd-Harz, Phenol-Formaldehyd-Harz oder Isocyanate zugegen sind.

8. Plattenwerkstoff nach einem der Ansprüche 1 bis 3, dadurch gekennzeichnet, daß in mindestens einer Zwischenschicht (14) ein Anteil von 1O bis 5O Gewichtsprozent des Teppichmaterials (1O) an faserartigen Holzspänen (3) in homogener Verteilung und willkürlicher Orientierung enthalten ist.

9. Plattenwerkstoff nach Anspruch 4, dadurch gekennzeichnet, daß die faserartigen Holzspäne (3) eine Größenverteilung mit einem Dickenmaximum bei etwa O,2 bis O,4 mm und einem Schlankheitsgrad von etwa 1 : 1O bis 1 : 1OO aufweisen.

10. Plattenwerkstoff nach einem der Ansprüche 1 bis 9, dadurch gekennzeichnet, daß das Formteil einen Anteil von O,5 bis 2 Gewichtsprozent Wachs oder Stearin enthält.

11. Verfahren zur Herstellung eines Plattenwerkstoffs aus mehreren separaten, Holzfurnier umfassenden Schichten, die flächig miteinander verbunden sind, bei welchem Teppichmaterial mit mindestens einem Anteil an Altteppich ungereinigt zu einem überwiegend fasrigen Gewölle zerkleinert wird, bei welchem das zerkleinerte Teppichmaterial in Anwesenheit eines thermoplastischen Bindemittels in einem Anteil von 5 bis 3O Gewichtsprozent der zu verpressenden Gesamtmasse bei einer oberhalb des Schmelzpunkts des thermoplastischen Bindemittels, jedoch unterhalb des Schmelzpunkts etwaiger sonst in der gesamten Masse enthaltener thermoplastischer Bestandteile gelegenen Temperatur zu einer kompakten dünnen Platte (14) verpreßt wird und bei welchem mindestens eine der dünnen Platten (14) abwechselnd mit mindestens einer Holzfurnierschicht (21,21') zu einem Stapel zusammengefügt und zu einem mehrschichtigen Plattenwerkstoff (4O) verklebt werden.

12. Verfahren zur Herstellung eines Plattenwerkstoffs aus mehreren separaten, Holzfurnier umfassenden Schichten, die flächig miteinander verbunden sind, bei welchem Teppichmaterial mit mindestens einem Anteil an Altteppich ungereinigt zu einem überwiegend fasrigen Gewölle zerkleinert wird, bei welchem das zerkleinerte Teppichmaterial in Anwesenheit eines thermoplastischen Bindemittels in einem Anteil von 5 bis 3O Gewichtsprozent der zu verpressenden Gesamtmasse in einer gestreuten Schicht (12) mit mindestens einer Holzfurnierschicht (21,21') zusammengebracht wird und bei welchem die beiden Schichten zusammen bei einer oberhalb des Schmelzpunkts des thermoplastischen Bindemittels, jedoch unterhalb des Schmelzpunkts etwaiger sonst in der gesamten Masse enthaltener thermoplastischer Bestandteile gelegenen Temperatur zu einem kompakten mehrschichtigen Plattenwerkstoff verpreßt werden.

13. Verfahren nach Anspruch 11 oder 12, dadurch gekennzeichnet, daß das thermoplastische Bindemittel aus dem Teppichmaterial stammt.

14. Verfahren nach Anspruch 11 oder 12, dadurch gekennzeichnet, daß zumindest ein Teil des thermoplastischen Bindemittels dem Teppichmaterial zugesetzt wird.

15. Verfahren nach einem der Ansprüche 11 bis 14, dadurch gekennzeichnet, daß das Teppichmaterial zunächst durch Haken in Stücke mit einer größten Abmessung im Bereich von etwa 5 bis 15 cm vorzerkleinert und anschließend gemahlen oder gerissen wird.

16. Verfahren nach Anspruch 15, dadurch gekennzeichnet, daß das Mahlen fortgesetzt wird, bis das Teppichmaterial durch ein Sieb einer wählbaren Feinheit durchgeht.

17. Verfahren nach einem der Ansprüche 11 bis 16, dadurch gekennzeichnet, daß die Gesamtmischung vor dem Verpressen mit einem Zusatz von Wachs in einer Menge von O,5 bis 2 Gewichtsprozent der Gesamtmasse versehen wird.
